# EUROPÄISCHE PATENTSCHRIFT

(11) **EP 1 905 533 B1**
(45) Veröffentlichungstag und Bekanntmachung des Hinweises auf die Patenterteilung: **06.11.2013**
(21) Anmeldenummer: 07018663.0
(22) Anmeldetag: 22.09.2007
(51) Int. Cl.: B23K 37/00, B23K 9/10, B23K 9/095

(54) **Verfahren zum Kalibrieren eines Steuerwertes eines Schweissgerätes sowie Schweissgerät zur Durchführung des Verfahrens**
Method for calibrating the control value of a welding device and welding device for implementing the method
Procédé destiné à l'étalonnage d'une valeur de commande d'un appareil de soudure ainsi qu'appareil de soudure destiné à l'exécution du procédé

(30) Priorität: 27.09.2006 DE 102006047107
(43) Veröffentlichungstag der Anmeldung: 02.04.2008
(73) Patentinhaber: Lorch Schweisstechnik GmbH, 71549 Auenwald (DE)
(72) Erfinder: Jaeschke, Birger, Dr., 71522 Backnang (DE)
(74) Vertreter: Karrais, Martin

(56) Entgegenhaltungen:
- EP-A2- 1 295 666
- WO-A1-2004/110691
- DE-A1-102005 005 771
- US-A1- 2004 099 648

## Beschreibung

Die Erfindung betrifft ein Verfahren zum gerätespezifischen Kalibrieren von mindestens einem Steuerwert eines Schweißgerätes, das eine programmierbare Steuereinheit, mindestens ein Speicherglied und eine Leistungselektronik aufweist, wobei mittels der Steuereinheit auf Basis des Steuerwertes zumindest ein Schweißprozessparameter steuer- oder regelbar ist (siehe z.B. DE 10 2005 005771 A1).

Außerdem betrifft die Erfindung ein Schweißgerät zur Durchführung des Verfahrens mit einer programmierbaren Steuereinheit, mindestens einem Speicherglied und einer Leistungselektronik, wobei mittels der Steuereinheit auf Basis von mindestens einem Steuerwert zumindest ein Schweißprozessparameter steuer- oder regelbar ist.

Programmierbare Schweißgeräte sind in vielfältiger Ausgestaltung bekannt. Sie sind derart ausgebildet, dass mindestens ein Schweißprozessparameter vorgegeben werden kann, beispielsweise der Schweißstrom, die Schweißspannung und/oder die Vorschubgeschwindigkeit des Schweißdrahtes, der einem an das Schweißgerät anschließbaren Schweißbrenner zuführbar ist.

Derartige Schweißgeräte müssen im Verlauf ihrer Fertigung kalibriert werden, um zu gewährleisten, dass die gewünschten Schweißprozessparameter tatsächlich reproduzierbar gesteuert oder geregelt werden können. Hierzu kommen üblicherweise manuell verstellbare Stellelemente zum Einsatz, zum Beispiel verstellbare Ohmsche Widerstände, Kapazitäten und/oder Induktivitäten. Diese Stellelemente werden bei der Endabnahme des Gerätes, also bei dessen Endprüfung, vom Hersteller manuell verstellt, um einen Steuerwert, der vom Betriebsprogramm zur Steuerung oder Regelung eines Schweißprozessparameters herangezogen wird, beispielsweise einen während des Einsatzes des Schweißgerätes messtechnisch erfassten Istwert, zu kalibrieren. Zur messtechnischen Erfassung des Istwertes kann das Schweißgerät einen Sensor aufweisen, dessen Sensorsignal bei der Endabnahme des Gerätes im Herstellerwerk durch Verstellen entsprechender Stellelemente an das Sensorsignal eines externen kalibrierten Sensors angepasst wird.

Ein derartiges manuelles Kalibrieren oder Abgleichen ist mit einem nicht unerheblichen Aufwand verbunden, denn die zum Kalibrieren erforderlichen Stellelemente müssen bereits bei der Konzeption des Schweißgerätes berücksichtigt und bei der Herstellung des Gerätes montiert werden. Hierbei muss auch eine hinreichende Zugänglichkeit der Stellelemente gewährleistet sein.

Aufgabe der vorliegenden Erfindung ist es, ein Verfahren zum Kalibrieren der eingangs genannten Art sowie ein Schweißgerät zur Durchführung des Verfahrens der eingangs genannten Art derart weiterzubilden, dass der Aufwand zum Kalibrieren oder Abgleichen von Steuerwerten vermindert werden kann.

Diese Aufgabe wird bei einem Verfahren der gattungsgemäßen Art erfindungsgemäß dadurch gelöst, dass man herstellerseitig bei der Endabnahme des Schweißgerätes zumindest einen gerätespezifischen Korrekturfaktor, der einem Schweißprozessparameter zugeordnet ist, vorzugsweise unter Einsatz geeichter Messgeräte, bestimmt und in einem Speicherglied des Schweißgerätes abspeichert, und dass man bei der Steuerung oder Regelung des Schweißprozessparameters einen Steuerwert zum gerätespezifischen Kalibrieren mit dem dem Schweißprozessparameter zugeordneten Korrekturfaktor verknüpft.

In die Erfindung fließt der Gedanke mit ein, dass die "Intelligenz" der Steuereinheit des Schweißgerätes nicht nur zu dessen Steuerung oder Regelung herangezogen werden kann, sondern dass mittels der Steuereinheit auch Steuerwerte gerätespezifisch kalibriert werden können. Dabei wird die Erkenntnis genutzt, dass gerätespezifische Korrekturfaktoren bei der Steuerung oder Regelung eines Schweißprozessparameters ebenso aus einem Speicherglied abgerufen werden können wie Prozessparameter eines Schweißprozesses. Ein Korrekturfaktor kann dann bei der Steuerung oder Regelung eines Schweißprozessparameters mit einem Steuerwert, der vom Betriebsprogramm zur Steuerung oder Regelung herangezogen wird, verknüpft werden. Auf diese Weise lässt sich der Steuerwert gerätespezifisch, das heißt auf das jeweils vorliegende konkrete Schweißgerät bezogen, kalibrieren oder abgleichen, und der gerätespezifisch kalibrierte oder abgeglichene Steuerwert kann dann für die weitere Steuerung oder Regelung verwendet werden. Die manuelle Verstellung von Stellelementen zum Kalibrieren kann somit entfallen. Stattdessen werden gerätespezifische Korrekturfaktoren, die während der Endabnahme vom Hersteller des Schweißgerätes ermittelt werden, in einem Speicherglied des Schweißgerätes abgespeichert, und beim späteren Betrieb des Schweißgerätes werden diese Korrekturfaktoren zum gerätespezifischen Kalibrieren herangezogen.

Vorzugsweise speichert man den Korrekturfaktor bei der Endabnahme des Schweißgerätes derart ab, dass er auch nach einer Aktualisierung von Prozessparametern, wie sie beispielsweise bei Einsatz eines neuen Betriebsprogramms vorgenommen wird, unverändert zur Verfügung steht.

Der gerätespezifische Korrekturfaktor ist einem bestimmten Schweißprozessparameter zugeordnet, beispielsweise dem Schweißstrom, der Schweißspannung, der Lichtbogenspannung, der Drahtvorschubgeschwindigkeit oder auch einem Gasvolumenstrom oder Kühlflüssigkeitsvolumenstrom.

Bei einer vorteilhaften Ausgestaltung des erfindungsgemäßen Verfahrens wird ein Istwert eines Schweißprozessparameters gerätespezifisch kalibriert, indem man den Istwert mit einem dem Schweißprozessparameter zugeordneten Korrekturfaktor verknüpft, und den gerätespezifisch kalibrierten Istwert vergleicht man mit einem Sollwert. Dies gibt die Möglichkeit, die Istwerterfassung des Schweißgerätes gerätespezifisch zu kalibrieren, indem man bei der Endabnahme des Schweißgerätes mittels eines geeichten Messgerätes den tatsächlich vorliegenden Istwert erfasst und mit dem von einer Istwerterfassungseinrichtung des Schweißgerätes erfassten Istwert vergleicht. Aufgrund von Bauteiltoleranzen ergibt sich häufig eine Differenz zwischen dem vom geeichten Messgerät bestimmten Wert und dem von der Istwerterfassungseinrichtung erfassten Wert. Die Differenz oder auch das Verhältnis der beiden Werte kann dann als Korrekturfaktor im Speicherglied gespeichert werden. Korrekturfaktoren können aber nicht nur für während des Betriebs des Schweißgerätes messtechnisch erfassbare Istwerte abgespeichert werden, sondern auch für sonstige Steuerwerte, die bei der Steuerung oder Regelung eines Schweißprozessparameters vom Betriebsprogramm des Schweißgerätes herangezogen werden. Dies wird nachstehend noch näher erläutert.

Um sicherzustellen, dass der mindestens eine gerätespezifische Korrekturfaktor bei einer Aktualisierung von Prozessparameters unverändert bleibt, kann man bei einer Aktualisierung des Betriebsprogramms, also beim Aufspielen eines Softwareupdates, den mindestens einen abgespeicherten Korrekturfaktor zunächst auslesen und dann im Verlauf der aktualisierten Programmierung unverändert wieder in das Speicherglied einlesen.

Der mindestens eine Korrekturfaktor kann auch zusammen mit einer Sicherungsinformation abgespeichert werden, die eine Veränderung des Korrekturfaktors bei der Aktualisierung des Betriebsprogramms verhindert.

Wie bereits erläutert, kann man während des Betriebes des Schweißgerätes einen mittels einer Istwerterfassungseinrichtung messtechnisch erfassten Istwert eines Schweißprozessparameters mit einem bei der Endabnahme des Gerätes in einem Speicherglied hinterlegten Korrekturfaktor verknüpfen, um den Istwert gerätespezifisch zu kalibrieren, und anschließend kann der kalibrierte Istwert mit einem vorgegebenen Sollwert verglichen werden. Es kann aber auch vorgesehen sein, dass man einen Sollwert eines Schweißprozessparameters gerätespezifisch kalibriert, indem man den Sollwert mit einem dem Schweißprozessparameter zugeordneten Korrekturfaktor verknüpft, und anschließend kann man den gerätespezifisch kalibrierten Sollwert mit einem messtechnisch erfassten Istwert vergleichen. Dies gibt die Möglichkeit, der Steuereinheit programmtechnisch einen lediglich vom gewünschten Schweißverfahren abhängigen Sollwert ohne Berücksichtigung gerätespezifischer Eigenschaften vorzugeben, und bei Einsatz des Schweißgerätes kalibriert man den programmtechnisch vorgegebenen Steuerwert mit Hilfe eines gerätespezifischen Korrekturfaktors.

Es kann auch vorgesehen sein, dass man einen geräteabhängigen Steuerwert kalibriert, indem man den Steuerwert mit einem gerätespezifischen Korrekturfaktor verknüpft. Unter einem geräteabhängigen Steuerwert wird hierbei ein Steuerwert eines Schweißprozessparameters verstanden, der von der konkreten Ausgestaltung des jeweiligen Schweißgerätes abhängig ist, also von den jeweils zum Einsatz kommenden elektrischen und mechanischen Bauteilen des Schweißgerätes. So bildet beispielsweise der Innenwiderstand des Schweißgerätes einen geräteabhängigen Steuerwert. Dieser korreliert mit der Lichtbogenspannung und ist von den elektrischen Bauteilen des Schweißgerätes abhängig. Programmtechnisch kann man einen geräteunspezifischen Wert des Innenwiderstandes vorgeben, dem man beim Betrieb des Schweißgerätes zur Steuerung oder Regelung der Lichtbogenspannung mit dem zugeordneten Korrekturwert verknüpft. Den Korrekturwert kann man bei der Endabnahme des Schweißgerätes ermitteln, indem man den gerätespezifischen Innenwiderstand messtechnisch mittels eines geeichten Messgerätes erfasst und mit dem geräteunspezifischen Wert des Innenwiderstandes vergleicht.

Es kann auch vorgesehen sein, dass man als Steuerwert, den man zum gerätespezifischen Kalibrieren mit einem Korrekturfaktor verknüpft, den Quotienten der Imaginärteile der Impedanz eines äußeren Schweißstromkreises und der Impedanz eines inneren Schweißstromkreises heranzieht. Hierzu kann man das Schweißgerät mit einer Schweißstromquelle ausstatten, die eine Leistungselektronik aufweist, an deren Ausgänge man über eine erste Stromleitung einen Schweißbrenner und über eine zweite Stromleitung ein Werkstück anschließt zur Ausbildung eines Schweißstromkreises. Der Schweißstromkreis weist einen innerhalb der Leistungselektronik angeordneten inneren Schweißstromkreis und einen außerhalb der Leistungselektronik angeordneten äußeren Schweißstromkreis auf. Der innere Schweißstromkreis kann beispielsweise zwischen der Sekundärseite eines Stromwandlers, vorzugsweise eines Transformators, und den Ausgängen der Leistungselektronik angeordnet sein und eine Schweißstromglättungsinduktivität sowie einen Schweißstromgleichrichter aufweisen. Der äußere Schweißstromkreis umfasst die beiden Stromleitungen sowie den Lichtbogen zwischen der Schweißelektrode des Schweißbrenners und dem Werkstück. Die am Lichtbogen abfallende Lichtbogenspannung ist mit der Länge des Lichtbogens und somit mit dem Abstand zwischen der Schweißelektrode und dem Werkstück korreliert. Dieser Abstand ist ein für die Steuerung bzw. Regelung eines Schweißprozesses wesentlicher Parameter. Eine direkte Messung der Lichtbogenspannung ist in der Praxis nicht durchführbar, da Elemente zum Abgreifen der Lichtbogenspannung nicht in unmittelbarer Nähe des Lichtbogens angeordnet sein können. Spannungen, die in größerer Entfernung vom Lichtbogen am Schweißstromkreis abgegriffen werden, sind jedoch nicht mit der tatsächlichen Lichtbogenspannung identisch, denn im Schweißstromkreis treten erhebliche Impedanzen auf. Wie in der deutschen Offenlegungsschrift DE 10 2005 005 771 A1 im Einzelnen erläutert ist, ist es möglich, aus Messwerten einer an den Ausgängen der Schweißstromquelle abzugreifenden Ausgangsspannung und des Schweißstromes sowie aus einem berechneten oder gemessenen Wert der Ausgangsspannung des im Schweißstromkreis angeordneten Schweißstromgleichrichters und aus konstruktiv vorgegebenen Werten des Realteils der Impedanz des äußeren Schweißstromkreises sowie dem Quotienten der Impedanz des äußeren Schweißstromkreises und der Impedanz des inneren Schweißstromkreises die Lichtbogenspannung zu ermitteln. Der Quotient der Imaginärteile der Impedanzen ist sowohl von spezifischen Eigenschaften der Schweißstromquelle als auch von der Impedanz des Schweißstromkreises abhängig. Erfindungsgemäß kann man einen programmtechnisch vorgegebenen Wert des Quotienten der Imaginärteile der Impedanz des äußeren Schweißstromkreises und der Impedanz des inneren Schweißstromkreises zum gerätespezifischen Kalibrieren mit einem Korrekturfaktor verknüpfen und den kalibrierten Wert des Quotienten zur Steuerung oder Regelung der Lichtbogenspannung heranziehen. Den Korrekturfaktor kann man im Rahmen der Endabnahme des Schweißgerätes beim Hersteller für einen vom Hersteller als "Norm" festgelegten äußeren Schweißstromkreis bestimmen. Als "Norm" kann vorteilhafterweise ein typischer Schweißstromkreis herangezogen werden, zum Beispiel mit einem Schweißbrenner, der über eine erste Stromleitung in Form eines drei Meter langen Anschlusskabels an die Schweißstromquelle angeschlossen ist, und ein locker auf dem Boden liegendes Massekabel von drei Meter Länge als zweite Stromleitung, über die das zu schweißende Werkstück mit der Schweißstromquelle verbunden wird. Zur Bestimmung des dem Quotienten der Imaginärteile der Impedanzen zugeordneten Korrekturfaktors kann man im Rahmen des Endabgleichs des Schweißgerätes beim Hersteller bei pulsierend gesteuertem Schweißstrom die Lichtbogenspannung direkt am Lichtbogen oder an einer äquivalenten künstlichen Last mit einem geeichten Messgerät messen und mit dem rechnerisch unter Verwendung eines vorgegebenen Wertes für den Quotienten der Imaginärteile der Impedanzen bestimmten Wert der Lichtbogenspannung vergleichen. Der programmtechnisch vorgegebene Wert des Quotienten der Imaginärteile der Impedanzen ist unabhängig von den gerätespezifischen Eigenschaften des jeweiligen Schweißgerätes und lässt die Toleranzen der Bauteile des Schweißgerätes unberücksichtigt. Dieser programmtechnisch vorgegebene Wert kann gerätespezifisch kalibriert werden, indem man ihn mit einem gerätespezifischen Korrekturfaktor verknüpft, der die spezifischen Eigenschaften des jeweiligen Schweißgerätes berücksichtigt. Dadurch kann erreicht werden, dass der rechnerisch ermittelte Wert der Lichtbogenspannung mit dem tatsächlich vorliegenden Wert der Lichtbogenspannung übereinstimmt.

Die programmtechnische Vorgabe eines Wertes für den Quotienten der Imaginärteile der Impedanzen des äußeren und des inneren Schweißstromkreises hat den Vorteil, dass dieser Wert mit weiteren, vom Benutzer vorgebbaren Parametern verknüpft werden kann. Der weitere Parameter kann beispielsweise dem Verhältnis entsprechen von dem vom Benutzer tatsächlich verwendeten äußeren Schweißstromkreis (zum Beispiel ein sechs Meter langes Massekabel und ein sechs Meter langes Anschlusskabel) zur "Norm" des Herstellers.

Bei einer vorteilhaften Ausgestaltung des erfindungsgemäßen Verfahrens verknüpft man den messtechnisch erfassten Istwert des Schweißstromes oder der Ausgangsspannung des Schweißgerätes zum gerätespezifischen Kalibrieren mit einem Korrekturfaktor, und den gerätespezifisch kalibrierten Istwert zieht man zur Steuerung oder Regelung des Schweißstromes bzw. der Schweißspannung heran. Während der Endabnahme des Schweißgerätes kann man den mittels eines Sensors einer Istwerterfassungseinrichtung erfassten Istwert des Schweißstromes mit einem mittels eines geeichten Messgerätes ermittelten Istwert des Schweißstromes vergleichen und aufgrund der Abweichung kann ein Korrekturfaktor bestimmt werden, den man dann in einem Speicherglied des Schweißgerätes abspeichert. Während des Betriebs des Schweißgerätes kann man dann den vom Sensor der Istwerterfassungseinrichtung erfassten Wert mit dem Korrekturfaktor verknüpfen und auf diese Weise für die weitere Regelung oder Steuerung einen gerätespezifisch kalibrierten Wert bereitstellen.

Es kann auch vorgesehen sein, dass man eine messtechnisch erfasste Drehzahl eines Antriebsmotors des Schweißgerätes zum gerätespezifischen Kalibrieren mit einem Korrekturfaktor verknüpft und die gerätespezifisch kalibrierte Drehzahl zur Steuerung oder Regelung der Schweißdrahtvorschubgeschwindigkeit heranzieht. Das Schweißgerät kann eine Schweißdrahtvorschubeinrichtung aufweisen mit einem steuerbaren Antriebsmotor, dessen Drehzahl erfasst werden kann. Die erfasste Drehzahl kann man mit einem der Schweißdrahtvorschubgeschwindigkeit zugeordneten Korrekturfaktor verknüpfen. Die Geschwindigkeit, mit der der Schweißdraht einem Schweißbrenner zugeführt wird, kann vom Benutzer vorgegeben werden. Das Schweißgerät weist hierzu die Schweißdrahtvorschubeinrichtung auf, wobei vorzugsweise eine Vorratstrommel für den Schweißdraht zum Einsatz kommt, von der der Schweißdraht abgewickelt werden kann. Der Vorschub des Schweißdrahtes erfolgt mittels eines steuerbaren Antriebsmotors, und die Vorschubgeschwindigkeit des Schweißdrahtes wird während des Einsatzes des Schweißgerätes aus der Drehzahl des Antriebsmotors berechnet. Die Drehzahl kann man beispielsweise durch Messung der Selbstinduktionsspannung (EMK-Elektromotorische Kraft) des Antriebsmotors bestimmen. Das Verhältnis der Drehzahl des Antriebsmotors zu dessen Selbstinduktionsspannung ist von der konkreten Ausgestaltung des zum Einsatz kommenden Antriebsmotors abhängig. Die gemessene Selbstinduktionsspannung kann man gemäß der vorliegenden Erfindung mit einem Korrekturfaktor verknüpfen, mit dessen Hilfe die motorspezifischen Toleranzen ausgeglichen werden können. Hierzu kann man bei der Endabnahme des Schweißgerätes die Drehzahl des Antriebsmotors mittels eines geeichten Messgerätes messen und mit der rechnerisch aus der erfassten Selbstinduktionsspannung des Antriebsmotors bestimmten Drehzahl in Beziehung setzen. Durch Differenz- oder Quotientenbildung kann man dann den gewünschten Korrekturfaktor ermitteln, den man im Speicherglied des Schweißgerätes abspeichert und dann zur Steuerung der Schweißdrahtvorschubgeschwindigkeit heranzieht.

Von Vorteil ist es, wenn man einen messtechnisch erfassten Istwert eines Gasvolumenstroms oder eines Kühlmittelvolumenstroms des Schweißgerätes zum gerätespezifischen Kalibrieren mit einem Korrekturfaktor verknüpft und den gerätespezifisch kalibrierten Istwert zur Steuerung oder Regelung des Gasvolumenstroms bzw. des Kühlmittelvolumenstroms heranzieht. Zur Steuerung des Gasvolumenstroms kann man während des Betriebes des Schweißgerätes mittels einer Gasstromerfassungseinrichtung den Volumenstrom des zum Einsatz kommenden Gases, vorzugsweise eines Schutzgases, zum Beispiel Argon oder Helium, erfassen und mit einem programmtechnisch vorgegebenen Sollwert vergleichen. Bei der Endabnahme des Schweißgerätes kann man mittels eines geeichten Messgerätes den tatsächlichen Gasvolumenstrom messen und mit dem von der Gasstromerfassungseinrichtung bereitgestellten Istwert in Beziehung setzen. Beispielsweise durch Verhältnisbildung kann man dann ein dem Gasvolumenstrom zugeordneten Korrekturfaktor bestimmen, der die gerätespezifischen Eigenschaften berücksichtigt und den man in einem Speicherglied abspeichert.

In entsprechender Weise kann man mittels einer Kühlmittelstromerfassungseinrichtung den Istwert des Kühlmittelstroms erfassen und den erfassten Istwert mit einem dem Kühlmittelvolumenstrom zugeordneten Korrekturfaktor verknüpfen. Dies ermöglicht es auf einfache Weise, die dem Schweißbrenner pro Zeiteinheit zugeführte Kühlmittelmenge, beispielsweise die Menge an Wasser, zu steuern oder regeln. Während des Einsatzes des Schweißgerätes kann man den Kühlmittelvolumenstrom mittels eines Sensors erfassen. Den erfassten Istwert kann man mit einem abgespeicherten Korrekturfaktor verknüpfen, der die gerätespezifischen Eigenschaften der Kühlmittelzufuhr berücksichtigt.

Wie eingangs erwähnt, betrifft die Erfindung auch ein Schweißgerät nach Anspruch 10 zur Durchführung des voranstehend erläuterten Verfahrens. Um den Aufwand zum Kalibrieren oder Abgleichen von Steuerwerten zu vermindern, wird erfindungsgemäß ein Schweißgerät mit den Merkmalen von Patentanspruch 10 vorgeschlagen. Das Schweißgerät ermöglicht es, einen bei der Endabnahme bestimmbaren Korrekturfaktor in einem Speicherglied abzuspeichern, und ein Steuerwert kann bei der Steuerung oder Regelung eines Schweißprozesses mit dem Korrekturwert verknüpft werden. Dies ermöglicht eine gerätespezifische Kalibrierung des Steuerwertes, ohne dass hierzu das Schweißgerät mit manuell verstellbaren Stellelementen ausgestattet sein muss, die bei der Endabnahme des Schweißgerätes zugänglich sein müssen.

Bei einer bevorzugten Ausgestaltung des Schweißgerätes ist der gerätespezifisch kalibrierbare Steuerwert ein Istwert eines Schweißprozessparameters und das Schweißgerät weist zumindest eine Istwerterfassungseinrichtung auf mit einem Sensor zum Erfassen des Istwertes. Der Istwert ist zum gerätespezifischen Kalibrieren mit dem dem Schweißprozessparameter zugeordneten Korrekturfaktor verknüpfbar und der gerätespezifischkalibrierte Istwert ist mit einem vorgegebenen Sollwert vergleichbar. Dies gibt zum Beispiel die Möglichkeit, den vorgegebenen zeitabhängigen Verlauf des Schweißstromes oder der Schweißspannung auf einfache Weise zu steuern oder regeln. Bei der Endabnahme des Schweißgerätes kann der tatsächliche Schweißstrom bzw. die tatsächlich vorliegende Schweißspannung mittels eines geeichten Messgerätes erfasst und mit dem von der Istwerterfassungseinrichtung bereitgestellten Istwert in Beziehung gesetzt werden. Die Isterfassungseinrichtung kann hierzu einen Stromsensor bzw. einen Spannungssensor aufweisen, dem eine Signalverarbeitungseinheit zugeordnet sein kann. Der vom Schweißgerät messtechnisch erfasste Istwert kann mit dem vom geeichten Messgerät bereitgestellten Messwert verglichen werden, wobei die beiden Werte miteinander in Beziehung gesetzt werden können zur Bestimmung eines Korrekturfaktors, der dann gespeichert wird. Während des Einsatzes des Schweißgerätes kann dann der messtechnisch erfasste Istwert mit dem Korrekturfaktor verglichen werden und der somit gerätespezifisch kalibrierte Istwert kann zur Steuerung oder Regelung eines Schweißprozessparameters mit einem vom Betriebsprogramm vorgegebenen Sollwert verglichen werden.

Günstig ist es, wenn die Istwerterfassungseinrichtung ein Speicherglied zum Abspeichern des dem jeweiligen Istwert zugeordneten Korrekturfaktors umfasst. Wird die Istwerterfassungseinrichtung ausgetauscht, so wird mit dem integrierten Speicherglied auch ein neuer Korrekturfaktor bereitgestellt, der die gerätespezifischen Eigenschaften der jeweiligen Istwerterfassungseinrichtung berücksichtigt. Alternativ kann auch vorgesehen sein, dass der Korrekturfaktor zentral in einem Datenspeicher der Steuereinheit speicherbar ist.

Bei einer vorteilhaften Ausgestaltung des erfindungsgemäßen Schweißgerätes ist ein gerätespezifisch kalibrierbarer Steuerwert ein Sollwert eines Schweißprozessparameters und das Schweißgerät weist zumindest einen Sollwertgeber auf zur Bereitstellung des Sollwertes, wobei der Sollwert zur gerätespezifischen Kalibrierung mit dem dem Schweißprozessparameter zugeordneten Korrekturfaktor verknüpfbar und der gerätespezifisch kalibrierte Sollwert mit einem messtechnisch erfassten Istwert vergleichbar ist. Bei einer derartigen Ausgestaltung wird zur Regelung eines Schweißprozessparameters der vom Schweißgerät messtechnisch erfasste Istwert mit einem gerätespezifisch kalibrierten Sollwert verglichen, wobei zur Kalibrierung des Sollwertes der abgespeicherte Korrekturfaktor herangezogen wird. Dies gibt die Möglichkeit, der Steuereinheit vom Betriebsprogramm einen lediglich vom gewünschten Schweißverfahren abhängigen Sollwert ohne Berücksichtigung gerätespezifischer Eigenschaften vorzugeben und diesen bei Einsatz des Schweißgerätes mit Hilfe des gerätespezifischen Korrekturfaktors zu kalibrieren.

Der Sollwertgeber kann hierzu ein Speicherglied zum Abspeichern des Korrekturfaktors umfassen, so dass der Korrekturfaktor lokal abgespeichert ist. Wird der Sollwertgeber ausgetauscht, so wird mit dem integrierten Speicherglied auch ein neuer Korrekturfaktor bereitgestellt. Alternativ kann vorgesehen sein, dass der dem jeweiligen Sollwert zugeordnete Korrekturfaktor zentral im Datenspeicher der Steuereinheit abgespeichert ist.

Von Vorteil ist es, wenn das Schweißgerät einen Datenspeicher aufweist zum Abspeichern von mindestens einem Steuerwert, der einem Schweißprozessparameter zugeordnet ist und zur Steuerung oder Regelung des Schweißprozessparameters mit dem dem Schweißprozessparameter zugeordneten Korrekturfaktor verknüpfbar ist. Eine derartige Ausgestaltung ist insbesondere dann von Vorteil, wenn mit Hilfe des Korrekturfaktors nicht ein messtechnisch erfasster Istwert oder ein diesem zugeordneter Sollwert kalibriert werden soll, sondern wenn ein geräteabhängiger, das heißt von den jeweils zum Einsatz kommenden Bauteilen des Schweißgerätes abhängiger Steuerwert kalibriert werden soll, beispielsweise der Innenwiderstand des Schweißgerätes, wie dies voranstehend bereits erläutert wird.

Es wurde bereits darauf hingewiesen, dass als Steuerwert, der mit einem Korrekturfaktor verknüpfbar ist, insbesondere der Quotient der Imaginärteile der Impedanz eines äußeren Schweißstromkreises und der Impedanz eines inneren Schweißstromkreises herangezogen werden kann. Hierzu kann das Schweißgerät eine Schweißstromquelle umfassen mit einer Leistungselektronik, an deren Ausgänge über eine erste Stromleitung ein Schweißbrenner und über eine zweite Stromleitung ein Werkstück anschließbar sind zur Ausbildung eines Schweißstromkreises, der einen innerhalb der Leistungselektronik angeordneten inneren Schweißstromkreis und einen außerhalb der Leistungselektronik angeordneten äußeren Schweißstromkreis umfasst. Der innere Schweißstromkreis kann beispielsweise zwischen der Sekundärseite eines Stromwandlers, vorzugsweise eines Transformators, und den Ausgängen der Leistungselektronik angeordnet sein und eine Glättungsinduktivität sowie einen Schweißstromgleichrichter aufweisen. Wie bereits dargelegt, kann der Quotient der Imaginärteile der Impedanzen des äußeren und des inneren Schweißstromkreises zur Steuerung oder Regelung der Lichtbogenspannung herangezogen werden. Hierbei kann ein programmtechnisch vorgegebener Wert des Quotienten mit einem gerätespezifischen Korrekturfaktor verknüpft werden, der die spezifischen Eigenschaften des jeweiligen Schweißgerätes berücksichtigt, so dass dann auf Grundlage des korrigierten Wertes des Quotienten der rechnerisch ermittelte Wert der Lichtbogenspannung mit dem tatsächlich vorliegenden Wert der Lichtbogenspannung übereinstimmt.

Als messtechnisch erfassbarer Steuerwert kann beispielsweise der Schweißstrom herangezogen werden. Hierzu ist es günstig, wenn das Schweißgerät eine Schweißstromquelle umfasst mit einer Leistungselektronik, an deren Ausgänge über eine erste Stromleitung ein Schweißbrenner und über eine zweite Stromleitung ein Werkstück anschließbar sind zur Ausbildung eines Schweißstromkreises, wobei die Leistungselektronik eine Schweißstromerfassungseinrichtung aufweist zur Erfassung des Istwertes des Schweißstromes, und wobei der erfasste Istwert zum gerätespezifischen Kalibrieren mit einem dem Schweißstrom zugeordneten Korrekturfaktor verknüpfbar ist.

Hierbei kann vorgesehen sein, dass die Schweißstromquelle ein Speicherglied zum Abspeichern des dem Schweißstrom zugeordneten Korrekturfaktors umfasst. Bei der Endabnahme der Schweißstromquelle kann somit der die gerätespezifischen Eigenschaften der Schweißstromquelle berücksichtigende Korrekturfaktor im Speicherglied der Schweißstromquelle abgespeichert werden. Dies hat den Vorteil, dass bei einem Austausch der Schweißstromquelle der Steuereinheit des Schweißgerätes jeweils der aktuelle Korrekturfaktor bereitgestellt werden kann, indem das Speicherglied der zum Einsatz kommenden Schweißstromquelle ausgelesen wird. Alternativ kann vorgesehen sein, dass der dem Schweißstrom zugeordnete Korrekturfaktor zentral in einem Datenspeicher der Steuereinheit speicherbar ist.

Bei einer vorteilhaften Ausführungsform weist das Schweißgerät eine Schweißdrahtvorschubeinrichtung auf mit einem steuerbaren Antriebsmotor, dessen Drehzahl erfassbar ist, wobei die erfasste Drehzahl zum gerätespezifischen Kalibrieren mit einem der Schweißdrahtvorschubgeschwindigkeit zugeordneten Korrekturfaktor verknüpfbar ist. Wie bereits dargelegt, kann mittels der Schweißdrahtvorschubeinrichtung einem Schweißbrenner ein Schweißdraht zugeführt werden. Die Geschwindigkeit, mit der der Schweißdraht zugeführt wird, kann vom Benutzer vorgegeben werden. Vorzugsweise umfasst die Schweißdrahtvorschubeinrichtung eine Vorratstrommel, von der der Schweißdraht abgewickelt werden kann. Der Vorschub des Schweißdrahtes erfolgt mittels des steuerbaren Antriebsmotors, und die Vorschubgeschwindigkeit wird während des Einsatzes des Schweißgerätes aus der Drehzahl des Antriebsmotors berechnet. Die Drehzahl kann beispielsweise durch Messung der Selbstinduktionsspannung des Antriebsmotors bestimmt werden. Die gemessene Selbstinduktionsspannung oder auch ein aus der Selbstinduktionsspannung rechnerisch ermittelter Wert der Drehzahl des Antriebsmotors kann mit einem Korrekturfaktor verknüpft werden, mit dem motorspezifische Toleranzen ausgeglichen werden können.

Günstig ist es, wenn die Schweißdrahtvorschubeinrichtung ein Speicherglied umfasst zum Abspeichern des der Schweißdrahtvorschubgeschwindigkeit zugeordneten Korrekturfaktors. Wird die Schweißdrahtvorschubeinrichtung ausgetauscht, so wird mit dem integrierten Speicherglied auch ein neuer Korrekturfaktor bereitgestellt, der die gerätespezifischen Eigenschaften der jeweiligen Schweißdrahtvorschubeinrichtung berücksichtigt. Alternativ kann vorgesehen sein, dass der Korrekturfaktor zentral in einem Datenspeicher der Steuereinheit speicherbar ist.

Bei einer vorteilhaften Ausgestaltung weist das erfindungsgemäße Schweißgerät eine Gaszufuhreinrichtung auf mit einem steuerbaren Strömungsregler und mit einer Gasstromerfassungseinrichtung zum Erfassen des Istwertes des Gasvolumenstroms, wobei der erfasste Istwert mit einem dem Gasvolumenstrom zugeordneten Korrekturfaktor verknüpfbar ist. Das Speicherglied kann in der Gaszufuhreinrichtung angeordnet sein. Alternativ kann vorgesehen sein, dass der Korrekturfaktor in einem zentralen Datenspeicher der Steuereinheit speicherbar ist.

Entsprechend der Messung des Gasvolumenstroms kann auch die Zusammensetzung des dem Brenner zugeführten Gases, vorzugsweise einer Schutzgasmischung, erfasst und beim Betrieb des Schweißgerät es mit einem zugeordneten Korrekturfaktor verknüpft werden. Dies ermöglicht es, die Schutzgaszusammensetzung zu steuern oder zu regeln, wobei ein messtechnisch erfasster Istwert mit einem Sollwert unter Berücksichtigung eines gerätespezifischen Korrekturfaktors verglichen wird.

Bei einer bevorzugten Ausführungsform weist das Schweißgerät eine Kühlmittelzufuhreinrichtung auf zum Kühlen eines an das Schweißgerät angeschlossenen Schweißbrenners, wobei die Kühlmittelzufuhreinrichtung eine Kühlmittelstromerfassungseinheit umfasst zum Erfassen des Istwertes des Kühlmittelvolumenstroms, und der erfasste Istwert ist mit einem dem Kühlmittelvolumenstrom zugeordneten Korrekturfaktor verknüpfbar. Wie bereits dargelegt, kann durch eine derartige Ausgestaltung die dem Schweißbrenner pro Zeiteinheit zugeführte Kühlmittelmenge gesteuert oder geregelt werden unter Berücksichtigung gerätespezifischer Eigenschaften der Kühlmittelzufuhreinrichtung.

Der dem Kühlmittelvolumenstrom zugeordnete Korrekturfaktor kann in einem Speicherglied der Kühlmittelzufuhreinrichtung speicherbar sein. Alternativ kann vorgesehen sein, dass der Korrekturfaktor in einem zentralen Datenspeicher der Steuereinheit speicherbar ist.

Bei einer besonders bevorzugten Ausgestaltung umfasst das Schweißgerät eine Bedieneinheit mit einem berührungsempfindlichen Bildschirm (Touchscreen), wobei der Bedieneinheit ein Speicherglied zugeordnet ist zum Abspeichern von mindestens einem gerätespezifischen Korrekturfaktor für die Empfindlichkeit und/oder für den X-Y-Abgleich des Bildschirms. Gerätespezifische Korrekturfaktoren der Bedieneinheit können beispielsweise in einem Speicherglied der Bedieneinheit abgespeichert werden, wohingegen geräteunabhängige Steuerwerte programmtechnisch vorgegeben werden können. Eine manuelle Kalibrierung des Bildschirmes kann somit entfallen, die Kalibrierung der Empfindlichkeit und des X-Y-Abgleiches des Bildschirmes kann vielmehr rechnerisch unter Heranziehung der gerätespezifischen Korrekturfaktoren erfolgen.

Die Bedieneinheit kann das zum Abspeichern der Korrekturfaktoren zum Einsatz kommenden Speicherglied umfassen. Alternativ kann vorgesehen sein, dass die Korrekturfaktoren im zentralen Datenspeicher der Steuereinheit speicherbar sind.

Wie bereits erläutert, ist es von Vorteil, wenn der mindestens eine Korrekturfaktor bei Änderung der Programmierung der Steuereinheit unverändert bleibt oder gegen Veränderung gesichert ist.

Es kann beispielsweise vorgesehen sein, dass der mindestens eine abgespeicherte Korrekturfaktor nicht überschreibbar ist.

Von besonderem Vorteil ist es, wenn das Schweißgerät zum Abspeichern des mindestens einen Korrekturfaktors zumindest ein Speicherglied aufweist mit einem Speicherbereich, der bei einer Änderung der Programmierung der Steuereinheit nicht überschrieben wird.

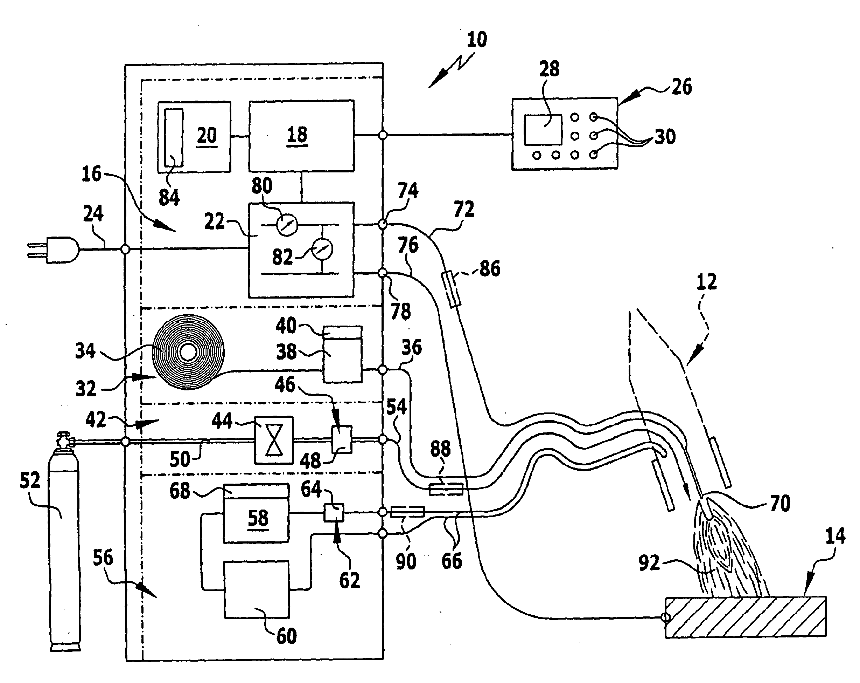

Die nachfolgende Beschreibung einer bevorzugten Ausführungsform der Erfindung dient im Zusammenhang mit der Zeichnung der näheren Erläuterung.

Die einzige Figur zeigt schematisch ein erfindungsgemäßes Schweißgerät, an das ein Schweißbrenner sowie ein zu schweißendes Werkstück angeschlossen sind.

In der Zeichnung ist schematisch ein insgesamt mit dem Bezugszeichen 10 belegtes Schweißgerät dargestellt, an das ein an sich bekannter und deshalb in der Zeichnung nur vereinfacht dargestellter Schweißbrenner 12 sowie ein zu schweißendes Werkstück 14 angeschlossen sind.

Das Schweißgerät 10 umfasst eine Schweißstromquelle 16 mit einer zentralen Steuereinheit 18, die mit einem Speicherglied in Form eines zentralen Datenspeichers 20 verbunden ist, sowie mit einer Leistungselektronik 22. Über ein Versorgungskabel 24 kann das Schweißgerät 10 mit einem Energieversorgungsnetz, insbesondere einem öffentlichen Versorgungsnetz, beispielsweise einem 230 V oder 400 V Wechselspannungsnetz, verbunden werden.

Das Schweißgerät 10 umfasst eine Bedieneinheit 26 mit einem berührungsempfindlichen Bildschirm (Touchscreen) 28 und mit Bedienungselementen 30, die beispielsweise als Drehknöpfe oder Taster ausgestaltet sein können. Die Bedieneinheit 26 steht mit der Steuereinheit 18 in elektrischer Verbindung.

Das Schweißgerät 10 weist auch eine Schweißdrahtvorschubeinrichtung 32 auf mit einer Vorratstrommel 34 für Schweißdraht 36, der dem Schweißbrenner 12 mittels eines Antriebsmotors 38 zugeführt werden kann. Dem Antriebsmotor 38 ist ein Motorsteuerungsglied 40 zugeordnet, das über an sich bekannte und deshalb in der Zeichnung nicht dargestellte Verbindungsleitungen mit der Steuereinheit 18 verbunden ist. Mittels des Motorsteuerungsglieds 40 kann die Drehzahl des Antriebsmotors 38 geregelt werden zur Erzielung einer bestimmten Vorschubgeschwindigkeit, mit der der Schweißdraht 36 dem Schweißbrenner 12 zugeführt wird. Zur Steuerung der Motordrehzahl kann vom Motorsteuerungsglied 40 die Selbstinduktionsspannung des Antriebsmotors 38 erfasst werden, und auf Grundlage der erfassten Selbstinduktionsspannung kann die Drehzahl des Motors berechnet werden. Die Drahtvorschubgeschwindigkeit kann vom Benutzer mit Hilfe der Bedieneinheit 26 vorgegeben werden.

Das Schweißgerät 10 weist auch eine Gaszufuhreinrichtung 42 auf mit einem steuerbaren Strömungsregler in Form einer steuerbaren Ventileinheit 44 und mit einer Gasstromerfassungseinheit 46, die einen Strömungssensor 48 umfasst. Die steuerbare Ventileinheit 44 steht über in der Zeichnung nicht dargestellte Steuerleitungen sowohl mit der Steuereinheit 18 als auch mit der Gasstromerfassungseinheit 46 in elektrischer Verbindung. Vom Benutzer kann mittels der Bedieneinheit 26 ein bestimmter Gasvolumenstrom vorgegeben werden, das heißt eine bestimmte Menge an Gas, die dem Schweißbrenner 12 pro Zeiteinheit zugeführt wird. Mit Hilfe des Strömungssensors 48 kann ein Istwert des aktuellen Gasvolumenstroms erfasst werden, und mittels der steuerbaren Ventileinheit 44 kann der Volumenstrom geregelt werden. Die steuerbare Ventileinheit 44 ist ebenso wie der Strömungssensor 48 in eine Gasleitung 50 geschaltet, an die einerseits ein Gasspeicher 52 und andererseits ein Gasschlauch 54 angeschlossen werden können. Über den Gasschlauch 54 ist die Gaszufuhreinrichtung 42 mit dem Schweißbrenner 12 verbunden.

Das Schweißgerät 10 weist darüber hinaus eine Kühlmittelzufuhreinrichtung 56 auf mit einer Kühlmittelpumpe 58 und einem Wärmetauscher 60 und einer Kühlmittelstromerfassungseinheit 62, die einen Durchflusssensor 64 umfasst.

Mit Hilfe des Durchflusssensors 64 kann die dem Schweißbrenner 12 über eine Kühlmittelleitung 66 zugeführte Kühlmittelmenge pro Zeiteinheit erfasst werden, und mittels der steuerbaren Kühlmittelpumpe 58, die über in der Zeichnung nicht dargestellte Steuerleitungen mit der Steuereinheit 18 verbunden ist, kann eine bestimmte Kühlmittelmenge vorgegeben werden, die pro Zeiteinheit dem Schweißbrenner 12 zugeführt werden soll. Mit Hilfe des Wärmetauschers 60 kann das Kühlmittel, vorzugsweise Wasser, fortlaufend gekühlt werden. Zur Steuerung ist die Kühlmittelpumpe 58 mit einem Pumpensteuerungsglied 68 verbunden, das wiederum an die Steuereinheit 18 angeschlossen ist.

Die Schweißelektrode 70 des Schweißbrenners 12 kann über eine erste Stromleitung in Form eines Anschlusskabels 72 an einen ersten Ausgang 74 der Schweißstromquelle 16 angeschlossen werden, und das zu schweißende Werkstück 14 lässt sich über eine zweite Stromleitung in Form eines Massekabels 76 an einen zweiten Ausgang 78 der Schweißstromquelle 16 anschließen.

Das Schweißgerät 10 kann in verschiedenen Schweißverfahren betrieben werden, wobei vom Benutzer beispielsweise der zeitliche Verlauf des Schweißstromes vorgegeben werden kann. Zur Regelung des Schweißstromes umfasst die Leistungselektronik 22 eine Istwerterfassungseinrichtung mit einem Stromsensor 80, der mit einer an sich bekannten und deshalb in der Zeichnung nicht dargestellten Auswerteeinheit verbunden ist und der Steuereinheit 18 einen Istwert des Schweißstroms bereitstellt. Außerdem umfasst die Leistungselektronik 22 eine weitere Istwerterfassungseinrichtung mit einem Spannungssensor 82, dem ebenfalls eine in der Zeichnung nicht dargestellte Auswerteeinheit zugeordnet ist, so dass der Steuereinheit 18 ein Istwert der zwischen den Ausgängen 74 und 78 anliegenden Schweißspannung bereitgestellt wird. Zur Regelung des Schweißstromes und der Schweißspannung können die erfassten Istwerte mit programmtechnisch vorgegebenen Sollwerten verglichen werden.

Der Stromsensor 80 ist ebenso wie der Spannungssensor 82 mit einer gerätespezifischen Ungenauigkeit verbunden. Entsprechendes gilt auch für die vom Motorsteuerungsglied 40 erfasste Drehzahl des Antriebsmotors 38 sowie für den von der Gasstromerfassungseinheit 46 bereitgestellten Gasvolumenstrom und den von der Kühlmittelstromerfassungseinheit 62 bereitgestellten Kühlmittelvolumenstrom. Alle diese Werte hängen von den gerätespezifischen Eigenschaften des Schweißgerätes 10 ab und sind aufgrund von Bauteiltoleranzen von Gerät zu Gerät unterschiedlich. Erfindungsgemäß weist deshalb das Schweißgerät 10 im Datenspeicher 20 einen separaten Speicherbereich 84 auf, in dem gerätespezifische Korrekturfaktoren abgespeichert werden können und der bei einer Aktualisierung des Betriebsprogramms der Steuereinheit 18 nicht überschrieben wird.

Bei der Endabnahme des Schweißgerätes 10 im Herstellerwerk kann der tatsächliche Schweißstrom, der durch das Anschlusskabel 72 fließt, mittels eines in der Zeichnung gestrichelt dargestellten geeichten Strommessgerätes 86 gemessen werden und der gemessene Stromwert kann mit dem Istwert verglichen werden, der vom Stromsensor 80 und dem zugeordneten Auswerteglied bereitgestellt wird. Es kann dann ein Verhältnis gebildet werden zwischen dem erfassten Istwert und dem gemessenen Stromwert, und dieses Verhältnis kann in Form eines Korrekturfaktors im separaten Speicherbereich 84 gespeichert werden. Dem Schweißstrom zugeordnete Korrekturfaktoren können hierbei bei unterschiedlichen Betriebszuständen des Schweißgerätes 10 ermittelt und gespeichert werden, das heißt Korrekturfaktoren können in Abhängigkeit von den gemessenen Stromwerten bestimmt und gespeichert werden. Während des laufenden Betriebes des Schweißgerätes 10 kann dann der vom Stromsensor 80 und dem zugeordneten Auswerteglied bereitgestellte Istwert mit dem zugeordneten Korrekturfaktor verknüpft werden und der somit korrigierte Istwert kann dann mit einem vorgegebenen Sollwert verglichen werden. Alternativ kann auch vorgesehen sein, dass der programmtechnisch vorgegebene Sollwert mit dem Korrekturfaktor verknüpft und dann mit dem erfassten Istwert verglichen wird zur Regelung des zeitlichen Verlaufes des Schweißstroms.

In entsprechender Weise kann bei der Endabnahme des Schweißgerätes 10 auch die Drehzahl des Antriebsmotors 38 mittels eines geeichten Drehzahlmessers gemessen und mit der vom Motorsteuerungsglied 40 bereitgestellten Motordrehzahl in Beziehung gesetzt werden. Es kann dann ein Verhältnis dieser beiden Werte berechnet und in Form eines der Schweißdrahtvorschubgeschwindigkeit zugeordneten Korrekturfaktors im separaten Speicherglied 84 und/oder in einem Speicher des Motorsteuerungsglieds 40 gespeichert werden.

Auch der von der Gasstromerfassungseinheit 46 bereitgestellte Istwert kann bei der Endabnahme des Schweißgerätes 10 mit einem mittels eines geeichten Gasströmungssensors 88 gemessenen Messwert in Beziehung gesetzt und ein dem Gasvolumenstrom zugeordneter Korrekturwert bestimmt werden. Der Korrekturwert kann ebenfalls im separaten Speicherbereich 84 des zentralen Datenspeichers 20 abgespeichert werden und/oder in einem Speicher der Gasstromerfassungseinheit 46.

Während der Endabnahme des Schweißgerätes 10 kann darüber hinaus ein Korrekturfaktor für die Kühlmittelströmung bestimmt und abgespeichert werden. Hierzu kann ein geeichter Kühlmittelströmungssensor 90 zum Einsatz kommen, dessen Messwert mit dem Istwert in Beziehung gesetzt werden kann, der von der Kühlmittelstromerfassungseinheit 62 bereitgestellt wird.

Durch Verhältnisbildung kann ein dem Kühlmittelvolumenstrom zugeordneter Korrekturwert bestimmt werden, der in einem Speicher der Kühlmittelstromerfassungseinheit 62 und/oder im zentralen Datenspeicher 20 abgespeichert werden kann.

Gemäß der Erfindung kann auch ein Korrekturfaktor für die Empfindlichkeit des berührungsempfindlichen Bildschirms 28 bestimmt werden sowie ein Korrekturfaktor für den X-Y-Abgleich des Bildschirmes 28. Auch diese Korrekturfaktoren können im zentralen Datenspeicher 20 abgespeichert werden und/oder in einem in der Zeichnung nicht dargestellten Speicher der Bedieneinheit 26.

Ein weiterer Schweißprozessparameter ist die am Lichtbogen 92 zwischen der Schweißelektrode 70 und dem Werkstück 40 abfallende Lichtbogenspannung. Diese kann von der Steuereinheit 18 bestimmt werden aus der Ausgangsspannung eines an sich bekannten und deshalb in der Zeichnung nicht dargestellten Schweißstromgleichrichters der Leistungselektronik 22 und aus konstruktiv vorgegebenen Werten des Realteiles des Impedanz des äußeren Schweißstromkreises und des Quotienten der Imaginärteile der Impedanz des äußeren Schweißstromkreises und der Impedanz des inneren Schweißstromkreises. Der innere Schweißstromkreis wird hierbei von den Bauteilen bestimmt, die zwischen der Sekundärseite eines Stromwandlers, vorzugsweise eines Transformators, der Leistungselektronik und den Ausgängen 74 und 78 angeordnet sind. Diese Bauteile sind dem Fachmann an sich bekannt und werden daher nicht näher erläutert. Der äußere Schweißstromkreis wird durch das Anschlusskabel 72 und das Massenkabel 76 sowie den Lichtbogen 92 bestimmt. Wie in der Offenlegungsschrift DE 10 2005 005 771 A1 im Einzelnen erläutert ist, kann aus den genannten Werten die Lichtbogenspannung rechnerisch bestimmt werden. Zur Vermeidung von Wiederholungen wird hinsichtlich der Bestimmung der Lichtbogenspannung auf den Offenbarungsgehalt der genannten Offenlegungsschrift verwiesen. Erfindungsgemäß ist nun vorgesehen, dass der Quotient der Imaginärteile der Impedanzen des äußeren und inneren Schweißstromkreises für ein bestimmtes Schweißgerät 10 im Rahmen des Endabgleichs beim Hersteller unter Verwendung eines vom Hersteller als "Norm" festgelegten äußeren Schweißstromkreis bestimmt wird. Der äußere Schweißstromkreis wird hierbei durch ein Standard-Anschlusskabel 72 von drei Meter Länge und ein Standard-Massekabel 76 von ebenfalls drei Meter Länge und einen üblichen Schweißbrenner 12 gebildet. Bei pulsierendem Schweißstrom wird im Rahmen des Endabgleichs die tatsächlich zwischen der Schweißelektrode 70 und dem Werkstück 14 abfallende Lichtbogenspannung mit einem geeichten Messgerät gemessen und der zur rechnerischen Ermittlung der gemessenen Lichtbogenspannung erforderliche Quotient der Imaginärteile der Impedanzen des äußeren und des inneren Schweißstromkreises wird ermittelt. Dieser Quotient, der die gerätespezifischen Eigenschaften des jeweiligen Schweißgerätes 10 berücksichtigt, wird mit einem vom Betriebsprogramm der Schweißstromquelle 16 vorgegebenen, theoretischen Quotienten in Beziehung gesetzt und durch Verhältnisbildung wird ein Korrekturfaktor bestimmt, der im separaten Speicherbereich 84 des Datenspeichers 20 gespeichert wird. Auf diese Weise kann dann während des laufenden Betriebes des Schweißgerätes 10 der programmtechnisch vorgegebene Quotient der Impedanzen mit dem diesem Quotienten zugeordneten Korrekturfaktor verknüpft werden zur rechnerischen Ermittlung der am Lichtbogen 92 abfallenden Lichtbogenspannung.

## Patentansprüche

1. Verfahren zum gerätespezifischen Kalibrieren von mindestens einem Steuerwert eines Schweißgerätes (10), das eine programmierbare Steuereinheit (18), mindestens ein Speicherglied (84) und eine Leistungselektronik (22) aufweist, wobei mittels der Steuereinheit (18) auf Basis des Steuerwertes zumindest ein Schweißprozessparameter steuer- oder regelbar ist, **dadurch gekennzeichnet, dass** man herstellerseitig bei der Endabnahme des Schweißgerätes (10) zumindest einen gerätespezifischen Korrekturfaktor, der einem Schweißprozessparameter zugeordnet ist, bestimmt und in einem Speicherglied (84) des Schweißgerätes (10) abspeichert, und dass man bei der Steuerung oder Regelung des Schweißprozessparameters einen Steuerwert zum gerätespezifischen Kalibrieren mit dem dem Schweißprozessparameter zugeordneten Korrekturfaktor verknüpft.

2. Verfahren nach Anspruch 1, **dadurch gekennzeichnet, dass** man einen Istwert eines Schweißprozessparameters gerätespezifisch kalibriert, indem man den Istwert mit einem dem Schweißprozessparameter zugeordneten Korrekturfaktor verknüpft, und dass man den gerätespezifisch kalibrierten Istwert mit einem Sollwert vergleicht.

3. Verfahren nach Anspruch 1, **dadurch gekennzeichnet, dass** man einen Sollwert eines Schweißprozessparameters gerätespezifisch kalibriert, indem man den Sollwert mit einem dem Schweißprozessparameter zugeordneten Korrekturfaktor verknüpft, und dass man den gerätespezifisch kalibrierten Sollwert mit einem Istwert vergleicht.

4. Verfahren nach einem der voranstehenden Ansprüche, **dadurch gekennzeichnet, dass** man einen geräteabhängigen Steuerwert gerätespezifisch kalibriert, indem man den Steuerwert mit einem gerätespezifischen Korrekturfaktor verknüpft.

5. Verfahren nach einem der voranstehenden Ansprüche, **dadurch gekennzeichnet, dass** man einen programmtechnisch vorgegebenen Wert des Innenwiderstandes des Schweißgerätes (10) zum gerätespezifischen Kalibrieren mit einem Korrekturfaktor verknüpft und den kalibrierten Wert des Innenwiderstandes zur Steuerung oder Regelung der Lichtbogenspannung heranzieht.

6. Verfahren nach einem der voranstehenden Ansprüche, **dadurch gekennzeichnet, dass** man einen programmtechnisch vorgegebenen Wert des Quotienten der Imaginärteile der Impedanz eines äußeren Schweißstromkreises und der Impedanz eines inneren Schweißstromkreises zum gerätespezifischen Kalibrieren mit einem Korrekturfaktor verknüpft und den kalibrierten Wert des Quotienten zur Steuerung oder Regelung der Lichtbogenspannung heranzieht.

7. Verfahren nach einem der voranstehenden Ansprüche, **dadurch gekennzeichnet, dass** man den messtechnisch erfassten Istwert des Schweißstromes oder der Ausgangsspannung des Schweißgerätes (10) zum gerätespezifischen Kalibrieren mit einem Korrekturfaktor verknüpft und den gerätespezifisch kalibrierten Strom- oder Spannungswert zur Steuerung oder Regelung des Schweißstromes bzw. der Schweißspannung heranzieht.

8. Verfahren nach einem der voranstehenden Ansprüche, **dadurch gekennzeichnet, dass** man eine messtechnisch erfasste Drehzahl eines Antriebsmotors (38) des Schweißgerätes (10) zum gerätespezifischen Kalibrieren mit einem Korrekturfaktor verknüpft und die gerätespezifisch kalibrierte Drehzahl zur Steuerung oder Regelung der Schweißdrahtvorschubgeschwindigkeit heranzieht.

9. Verfahren nach einem der voranstehenden Ansprüche, **dadurch gekennzeichnet, dass** man einen messtechnisch erfassten Istwert eines Gasvolumenstroms oder eines Kühlmittelvolumenstroms des Schweißgerätes (10) zum gerätespezifischen Kalibrieren mit einem Korrekturfaktor verknüpft und den gerätespezifisch kalibrierten Istwert zur Steuerung oder Regelung des Gasvolumenstroms bzw. des Kühlmittelvolumenstroms heranzieht.

10. Schweißgerät zur Durchführung des Verfahrens nach einem der voranstehenden Ansprüche, mit einer programmierbaren Steuereinheit (18), mindestens einem Speicherglied (84) und einer Leistungselektronik (22), wobei mittels der Steuereinheit (18) auf Basis von mindestens einem Steuerwert zumindest ein Schweißprozessparameter steuer- oder regelbar ist, **dadurch gekennzeichnet, dass** das Schweißgerät (10) mindestens einen gerätespezifisch kalibrierbaren Steuerwert aufweist sowie zumindest ein Speicherglied (84) worin mindestens ein, bei der Endabnahme des Schweißgeräts (10) gerätespezifisch bestimmter Korrekturfaktor abgespeichert ist, wobei der Steuerwert bei der Steuerung oder Regelung eines Schweißprozesses durch Verknüpfung mit dem Korrekturfaktor gerätespezifisch kalibrierbar ist.

11. Schweißgerät nach Anspruch 10, **dadurch gekennzeichnet, dass** der gerätespezifisch kalibrierbare Steuerwert ein Istwert eines Schweißprozessparameters ist und dass das Schweißgerät (10) zumindest eine Istwerterfassungseinrichtung aufweist mit einem Sensor (48, 64, 80, 82) zum Erfassen des Istwertes, und dass der Istwert zum gerätespezifischen Kalibrieren mit dem dem Schweißprozessparameter zugeordneten Korrekturfaktor verknüpfbar und der gerätespezifisch kalibrierte Istwert mit einem vorgegebenen Sollwert vergleichbar ist.

12. Schweißgerät nach Anspruch 11, **dadurch gekennzeichnet, dass** die Istwerterfassungseinrichtung ein Speicherglied zum Abspeichern des Korrekturfaktors umfasst.

13. Schweißgerät nach einem der Ansprüche 10 bis 12, **dadurch gekennzeichnet, dass** der gerätespezifisch kalibrierbare Steuerwert ein Sollwert eines Schweißprozessparameters ist und dass das Schweißgerät (10) zumindest einen Sollwertgeber aufweist zur Bereitstellung des Sollwertes, wobei der Sollwert zum gerätespezifischen Kalibrieren mit dem dem Schweißprozessparameter zugeordneten Korrekturfaktor verknüpfbar und der gerätespezifisch kalibrierte Sollwert mit einem messtechnisch erfassten Istwert vergleichbar ist.

14. Schweißgerät nach Anspruch 13, **dadurch gekennzeichnet, dass** der mindestens eine Sollwertgeber ein Speicherglied zum Abspeichern des Korrekturfaktors umfasst.

15. Schweißgerät nach einem der Ansprüche 10 bis 14, **dadurch gekennzeichnet, dass** das Schweißgerät (10) einen Datenspeicher (20) aufweist zum Abspeichern von mindestens einem Steuerwert, der einem Schweißprozessparameter zugeordnet ist und zur Steuerung oder Regelung des Schweißprozessparameters mit dem dem Schweißprozessparameter zugeordneten Korrekturfaktor verknüpfbar ist.

16. Schweißgerät nach einem der Ansprüche 10 bis 15, **dadurch gekennzeichnet, dass** das Schweißgerät (10) eine Schweißstromquelle (16) umfasst mit der Leistungselektronik (22), an deren Ausgänge (74, 78) über eine erste Stromleitung (72) ein Schweißbrenner (12) und über eine zweite Stromleitung (76) ein Werkstück (14) anschließbar sind zur Ausbildung eines Schweißstromkreises, der einen innerhalb der Leistungselektronik (22) angeordneten inneren Schweißstromkreis und einen außerhalb der Leistungselektronik (22) angeordneten äußeren Schweißstromkreis umfasst, und dass der kalibrierbare Steuerwert der Quotient der Imaginärteile der Impedanzen des äußeren Schweißstromkreises und des inneren Schweißstromkreises ist.

17. Schweißgerät nach einem der Ansprüche 10 bis 16, **dadurch gekennzeichnet, dass** das Schweißgerät (10) eine Schweißstromquelle (16) umfasst mit der Leistungselektronik (22), an deren Ausgänge (74, 78) über eine erste Stromleitung (72) ein Schweißbrenner (12) und über eine zweite Stromleitung (76) ein Werkstück (14) anschließbar sind zur Ausbildung eines Schweißstromkreises, wobei die Leistungselektronik (22) eine Schweißstromerfassungseinrichtung aufweist zur Erfassung des Istwertes des Schweißstromes, und wobei der erfasste Istwert zum gerätespezifischen Kalibrieren mit einem dem Schweißstrom zugeordneten Korrekturfaktor verknüpfbar ist.

18. Schweißgerät nach Anspruch 17, **dadurch gekennzeichnet, dass** die Schweißstromquelle (16) ein Speicherglied umfasst zum Abspeichern des dem Schweißstrom zugeordneten Korrekturfaktors.

19. Schweißgerät nach einem der Ansprüche 10 bis 18, **dadurch gekennzeichnet, dass** das Schweißgerät (10) eine Schweißdrahtvorschubeinrichtung (32) umfasst mit einem steuerbaren Antriebsmotor (38), dessen Drehzahl erfassbar ist, wobei die erfasste Drehzahl zum gerätespezifischen Kalibrieren mit einem der Schweißdrahtvorschubgeschwindigkeit zugeordneten Korrekturfaktor verknüpfbar ist.

20. Schweißgerät nach Anspruch 19, **dadurch gekennzeichnet, dass** die Schweißdrahtvorschubeinrichtung (32) ein Speicherglied umfasst zum Abspeichern des der Schweißdrahtvorschubgeschwindigkeit zugeordneten Korrekturfaktors.

21. Schweißgerät nach einem der Ansprüche 10 bis 20, **dadurch gekennzeichnet, dass** das Schweißgerät (10) eine Gaszufuhreinrichtung (42) aufweist mit einem steuerbaren Strömungsregler (44) und mit einer Gasstromerfassungseinheit (46) zur Erfassung des Istwertes des Gasvolumenstromes, wobei der erfasste Istwert zum gerätespezifischen Kalibrieren mit einem dem Gasvolumenstrom zugeordneten Korrekturfaktor verknüpfbar ist.

22. Schweißgerät nach Anspruch 21, **dadurch gekennzeichnet, dass** die Gaszufuhreinrichtung (42) ein Speicherglied umfasst zum Abspeichern des dem Gasvolumenstrom zugeordneten Korrekturfaktors.

23. Schweißgerät nach einem der Ansprüche 10 bis 22, **dadurch gekennzeichnet, dass** das Schweißgerät (10) eine Kühlmittelzufuhreinrichtung (56) aufweist zum Kühlen eines an das Schweißgerät (10) angeschlossenen Schweißbrenners (12), wobei die Kühlmittelzufuhreinrichtung (56) eine Kühlmittelstromerfassungseinrichtung (62) aufweist zum Erfassen des Istwertes des Kühlmittelvolumenstromes, wobei der erfasste Istwert zum gerätespezifischen Kalibrieren mit einem dem Kühlmittelvolumenstrom zugeordneten Korrekturfaktor verknüpfbar ist.

24. Schweißgerät nach Anspruch 23, **dadurch gekennzeichnet, dass** die Kühlmittelzufuhreinrichtung (56) ein Speicherglied umfasst zum Abspeichern des dem Kühlmittelvolumenstrom zugeordneten Korrekturfaktors.

25. Schweißgerät nach einem der Ansprüche 10 bis 24, **dadurch gekennzeichnet, dass** das Schweißgerät (10) eine Bedieneinheit (26) mit einem berührungsempfindlichen Bildschirm (28) umfasst, wobei der Bedieneinheit (26) ein Speicherglied zugeordnet ist zum Abspeichern von mindestens einem gerätespezifischen Korrekturfaktor für die Empfindlichkeit und/oder den X-Y-Abgleich des Bildschirmes (28).

26. Schweißgerät nach Anspruch 25, **dadurch gekennzeichnet, dass** die Bedieneinheit (26) ein Speicherglied umfasst zum Abspeichern des der Empfindlichkeit und/oder dem X-Y-Abgleich des Bildschirmes (28) zugeordneten Korrekturfaktors.

27. Schweißgerät nach einem der Ansprüche 10 bis 26, **dadurch gekennzeichnet, dass** der mindestens eine Korrekturfaktor bei einer Änderung der Programmierung der Steuereinheit (18) unverändert bleibt oder gegen Veränderung gesichert ist.

28. Schweißgerät nach einem der Ansprüche 10 bis 27, **dadurch gekennzeichnet, dass** das Schweißgerät (10) zum Abspeichern des mindestens einen Korrekturfaktors zumindest ein Speicherglied (20) aufweist mit einem Speicherbereich (84) der bei einer Änderung der Programmierung der Steuereinheit (18) nicht überschreibbar ist

## Claims

1. A method of appliance-specific calibration of at least one control value of a welding appliance (10) which has a programmable control unit (18), at least one storage element (84) and a power electronic system (22), wherein at least one welding process parameter is capable of being controlled or regulated by means of the control unit (18) on the basis of the control value, **characterized in that** at least one appliance-specific correction factor which is assigned to a welding process parameter is determined by the manufacturer in the final inspection of the welding appliance (10) and is saved in a storage element (84) of the welding appliance (10), and during the control or regulation of the welding process parameter a control value is linked to the correction factor - assigned to the welding process parameter - for the appliance-specific calibration.

2. A method according to claim 1, **characterized in that** an actual value of a welding process parameter is calibrated in a manner specific to the appliance by the actual value being linked to a correction factor assigned to the welding process parameter, and the actual value calibrated in a manner specific to the appliance is compared with a nominal value.

3. A method according to claim 1, **characterized in that** a nominal value of a welding process parameter is calibrated in a manner specific to the appliance by the nominal value being linked to a correction factor assigned to the welding process parameter, and the nominal value calibrated in a manner specific to the appliance is compared with an actual value.

4. A method according to any one of the preceding claims, **characterized in that** an appliance-dependent control value is calibrated in a manner specific to the appliance by the control value being linked to an appliance-specific correction factor.

5. A method according to any one of the preceding claims, **characterized in that** a value - pre-set by a program - of the internal resistance of the welding appliance (10) is linked to a correction factor for the appliance-specific calibration, and the calibrated value of the internal resistance is used for the control or regulation of the arc voltage.

6. A method according to any one of the preceding claims, **characterized in that** a value - pre-set by a program - of the quotient of the imaginary parts of the impedance of an external welding current circuit and of the impedance of an internal welding current circuit is linked to a correction factor for the appliance-specific calibration, and the calibrated value of the quotient is used for the control or regulation of the arc voltage.

7. A method according to any one of the preceding claims, **characterized in that** the actual value - detected by measurement - of the welding current or of the output voltage of the welding appliance (10) is linked to a correction factor for the appliance-specific calibration, and the value - calibrated in a manner specific to the appliance - of the current or voltage is used for the control or regulation of the welding current or the welding voltage respectively.

8. A method according to any one of the preceding claims, **characterized in that** a rotational speed - detected by measurement - of a drive motor (38) of the welding appliance (10) is linked to a correction factor for the appliance-specific calibration, and the rotational speed calibrated in a manner specific to the appliance is used for the control or regulation of the feed rate of the welding wire.

9. A method according to any one of the preceding claims, **characterized in that** an actual value - detected by measurement - of a gas volume flow or of a coolant volume flow of the welding appliance (10) is linked to a correction factor for the appliance-specific calibration, and the actual value calibrated in a manner specific to the appliance is used for the control or regulation of the gas volume flow or the coolant volume flow respectively.

10. A welding appliance for performing the method according to any one of the preceding claims, with a programmable control unit (18), at least one storage element (84) and a power electronic system (22), wherein at least one welding process parameter is capable of being controlled or regulated by means of the control unit (18) on the basis of at least one control value, **characterized in that** the welding appliance (10) has at least one control value capable of being calibrated in a manner specific to the appliance and at least one storage element (84) in which at least one correction factor determined in a manner specific to the appliance in the final inspection of the welding appliance (10) is saved, wherein the control value is capable of being calibrated in a manner specific to the appliance by linking to the correction factor during the control or regulation of a welding process.

11. A welding appliance according to claim 10, **characterized in that** the control value capable of being calibrated in a manner specific to the appliance is an actual value of a welding process parameter, and the welding appliance (10) has at least one actual value detection device with a sensor (48, 64, 80, 82) for detecting the actual value, and the actual value is capable of being linked to the correction factor - assigned to the welding process parameter - for the appliance-specific calibration, and the actual value calibrated in a manner specific to the appliance is capable of being compared with a pre-set nominal value.

12. A welding appliance according to claim 11, **characterized in that** the actual value detection device has a storage element for storing the correction factor.

13. A welding appliance according to any one of claims 10 to 12, **characterized in that** the control value capable of being calibrated in a manner specific to the appliance is a nominal value of a welding process parameter, and the welding appliance (10) has at least one nominal value transmitter for providing the nominal value, wherein the nominal value is capable of being linked to the correction factor - assigned to the welding process parameter - for the appliance-specific calibration, and the nominal value calibrated in a manner specific to the appliance is capable of being compared with an actual value detected by measurement.

14. A welding appliance according to claim 13, **characterized in that** the at least one nominal value transmitter is a storage element for storing the correction factor.

15. A welding appliance according to any one of claims 10 to 14, **characterized in that** the welding appliance (10) has a data storage element (20) for storing at least one control value which is assigned to a welding process parameter and is capable of being linked to the correction factor - assigned to the welding process parameter - for the control or regulation of the welding process parameter.

16. A welding appliance according to any one of claims 10 to 15, **characterized in that** the welding appliance (10) comprises a welding current source (16) with the power electronic system (22), to the outputs (74, 78) of which a welding torch (12) is capable of being connected by way of a first current line (72) and a workpiece (14) is capable of being connected by way of a second current line (76) in order to form a welding current circuit which comprises an internal welding current circuit arranged inside the power electronic system (22) and an external welding current circuit arranged outside the power electronic system (22), and the control value capable of being calibrated is the quotient of the imaginary parts of the impedances of the external welding current circuit and the internal welding current circuit.

17. A welding appliance according to any one of claims 10 to 16, **characterized in that** the welding appliance (10) comprises a welding current source (16) with the power electronic system (22), to the outputs (74, 78) of which a welding torch (12) is capable of being connected by way of a first current line (72) and a workpiece (14) is capable of being connected by way of a second current line (76) in order to form a welding current circuit, wherein the power electronic system (22) has a welding current detection device for detecting the actual value of the welding current, and wherein the actual value detected is capable of being linked to a correction factor - assigned to the welding current - for the appliance-specific calibration.

18. A welding appliance according to claim 17, **characterized in that** the welding current source (16) comprises a storage element for storing the correction factor assigned to the welding current.

19. A welding appliance according to any one of claims 10 to 18, **characterized in that** the welding appliance (10) comprises a welding wire feed device (32) with a controllable drive motor (38), the rotational speed of which is capable of being detected, wherein the detected rotational speed is capable of being linked to a correction factor - assigned to the welding wire feed rate - for the appliance-specific calibration.

20. A welding appliance according to claim 19, **characterized in that** the welding wire feed device (32) comprises a storage element for storing the correction factor assigned to the welding wire feed rate.

21. A welding appliance according to any one of claims 10 to 20, **characterized in that** the welding appliance (10) has a gas supply device (42) with a controllable current regulator (44) and with a gas flow detection unit (46) for detecting the actual value of the gas volume flow, wherein the actual value detected is capable of being linked to a correction factor - assigned to the gas volume flow - for the appliance-specific calibration.

22. A welding appliance according to claim 21, **characterized in that** the gas supply device (42) comprises a storage element for storing the correction factor assigned to the gas volume flow.

23. A welding appliance according to any one of claims 10 to 22, **characterized in that** the welding appliance (10) has a coolant supply device (56) for cooling a welding torch (12) attached to the welding appliance (10), wherein the coolant supply device (56) has a coolant flow detection device (62) for detecting the actual value of the coolant volume flow, wherein the actual value detected is capable of being linked to a correction factor - assigned to the coolant volume flow - for the appliance-specific calibration.

24. A welding appliance according to claim 23, **characterized in that** the coolant supply device (56) comprises a storage element for storing the correction factor assigned to the coolant volume flow.

25. A welding appliance according to any one of claims 10 to 24, **characterized in that** the welding appliance (10) has an operating unit (26) with a touch-sensitive screen (28), wherein a storage element is assigned to the operating unit (26) in order to store at least one appliance-specific correction factor for the sensitivity and/or the X / Y balance of the screen (28).

26. A welding appliance according to claim 25, **characterized in that** the operating unit (26) comprises a storage element in order to store the correction factor assigned to the sensitivity and/or the X / Y balance of the screen (28).

27. A welding appliance according to any one of claims 10 to 26, **characterized in that** the at least one correction factor remains unchanged or is prevented from changing in the event of a change in the programming of the control unit (18).

28. A welding appliance according to any one of claims 10 to 27, **characterized in that** the welding appliance (10) has at least one storage element (20) for storing the at least one correction factor with a storage area (84) which is not capable of being exceeded in the event of a change in the programming of the control unit (18).

## Revendications

1. Procédé pour étalonner au moins une valeur de commande d'un appareil de soudage (10), de manière spécifique à l'appareil, qui comprend une unité de commande programmable (18), au moins un organe de mémoire (84) et une électronique de puissance (22), au moins un paramètre de processus de soudage pouvant être commandé ou régulé sur la base de la valeur de commande, au moyen de l'unité de commande (18), **caractérisé en ce que** l'on détermine, côté fabricant, lors du contrôle final de l'appareil de soudage (10), au moins un facteur de correction spécifique à l'appareil, qui est associé à un paramètre de processus de soudage, et on le mémorise dans un organe de mémoire (84) de l'appareil de soudage (10), et **en ce que** lors de la commande ou de la régulation du paramètre de processus de soudage, on combine une valeur de commande pour l'étalonnage spécifique à l'appareil, avec le facteur de correction associé au paramètre de processus de soudage.

2. Procédé selon la revendication 1, **caractérisé en ce que** l'on étalonne de manière spécifique à l'appareil, une valeur réelle d'un paramètre de processus de soudage, en combinant la valeur réelle avec un facteur de correction associé au paramètre de processus de soudage, et **en ce que** l'on compare la valeur réelle étalonnée de manière spécifique à l'appareil, avec une valeur de consigne.

3. Procédé selon la revendication 1, **caractérisé en ce que** l'on étalonne de manière spécifique à l'appareil, une valeur de consigne d'un paramètre de processus de soudage, en combinant la valeur de consigne avec un facteur de correction associé au paramètre de processus de soudage, et **en ce que** l'on compare la valeur de consigne étalonnée de manière spécifique à l'appareil, avec une valeur réelle.

4. Procédé selon l'une des revendications précédentes, **caractérisé en ce que** l'on étalonne, de manière spécifique à l'appareil, une valeur de commande dépendant de l'appareil, en combinant la valeur de commande avec un facteur de correction spécifique à l'appareil.

5. Procédé selon l'une des revendications précédentes, **caractérisé en ce que** l'on combine une valeur, prédéterminée par une technique de programmation, de la résistance interne de l'appareil de soudage (10), avec un facteur de correction, pour l'étalonnage spécifique à l'appareil, et l'on utilise la valeur étalonnée de la résistance intérieure pour la commande ou la régulation de la tension d'arc électrique.

6. Procédé selon l'une des revendications précédentes, **caractérisé en ce que** l'on combine une valeur, prédéterminée par une technique de programmation, du quotient des parties imaginaires de l'impédance d'un circuit de courant de soudage externe et de l'impédance d'un circuit de courant de soudage interne, avec un facteur de correction, pour l'étalonnage spécifique à l'appareil, et l'on utilise la valeur étalonnée du quotient pour la commande ou la régulation de la tension d'arc électrique.

7. Procédé selon l'une des revendications précédentes, **caractérisé en ce que** l'on combine la valeur réelle, relevée par une technique de mesure, du courant de soudage ou de la tension de sortie de l'appareil de soudage (10), avec un facteur de correction, pour l'étalonnage spécifique à l'appareil, et l'on utilise la valeur de courant ou de tension étalonnée de manière spécifique à l'appareil, pour la commande ou la régulation du courant de soudage ou respectivement de la tension de soudage.

8. Procédé selon l'une des revendications précédentes, **caractérisé en ce que** l'on combine une vitesse de rotation, relevée par une technique de mesure, d'un moteur d'entraînement (38) de l'appareil de soudage (10), avec un facteur de correction, pour l'étalonnage spécifique à l'appareil, et l'on utilise la vitesse de rotation étalonnée de manière spécifique à l'appareil, pour la commande ou la régulation de la vitesse d'avance du fil d'apport de soudage.

9. Procédé selon l'une des revendications précédentes, **caractérisé en ce que** l'on combine une valeur réelle, relevée par une technique de mesure, d'un débit volumique de gaz ou d'un débit volumique de fluide de refroidissement de l'appareil de soudage (10), avec un facteur de correction, pour l'étalonnage spécifique à l'appareil, et l'on utilise la valeur réelle étalonnée de manière spécifique à l'appareil, pour la commande ou la régulation du débit volumique de gaz ou respectivement du débit volumique de fluide de refroidissement.

10. Appareil de soudage pour la mise en oeuvre du procédé selon l'une des revendications précédentes, comprenant une unité de commande programmable (18), au moins un organe de mémoire (84) et une électronique de puissance (22), au moins un paramètre de processus de soudage pouvant être commandé ou régulé sur la base d'au moins une valeur de commande, au moyen de l'unité de commande (18), **caractérisé en ce que** l'appareil de soudage (10) présente au moins une valeur de commande pouvant être étalonnée de manière spécifique à l'appareil, ainsi qu'au moins un organe de mémoire (84) dans lequel est mémorisé au moins un facteur de correction déterminé de manière spécifique à l'appareil lors du contrôle final de l'appareil de soudage (10), la valeur de commande pouvant être étalonnée de manière spécifique à l'appareil, lors de la commande ou de la régulation d'un processus de soudage, par combinaison avec le facteur de correction.

11. Appareil de soudage selon la revendication 10, **caractérisé en ce que** la valeur de commande pouvant être étalonnée de manière spécifique à l'appareil est une valeur réelle d'un paramètre de processus de soudage, et **en ce que** l'appareil de soudage (10) présente au moins un dispositif de relevé de valeur réelle comprenant un capteur (48, 64, 80, 82) pour le relevé de la valeur réelle, et **en ce que** la valeur réelle, pour l'étalonnage spécifique à l'appareil, peut être combinée avec le facteur de correction associé au paramètre de processus de soudage, et la valeur réelle étalonnée de manière spécifique à l'appareil peut être comparée à une valeur de consigne prédéfinie.

12. Appareil de soudage selon la revendication 11, **caractérisé en ce que** le dispositif de relevé de valeur réelle comprend un organe de mémoire pour mémoriser le facteur de correction.

13. Appareil de soudage selon l'une des revendications 10 à 12, **caractérisé en ce que** la valeur de commande pouvant être étalonnée de manière spécifique à l'appareil est une valeur de consigne d'un paramètre de processus de soudage, et **en ce que** l'appareil de soudage (10) présente au moins un générateur de valeur de consigne pour la mise à disposition de la valeur de consigne, et **en ce que** la valeur de consigne, pour l'étalonnage spécifique à l'appareil, peut être combinée avec le facteur de correction associé au paramètre de processus de soudage, et la valeur de consigne étalonnée de manière spécifique à l'appareil peut être comparée à une valeur réelle relevée par une technique de mesure.

14. Appareil de soudage selon la revendication 13, **caractérisé en ce que** ledit au moins un générateur de valeur de consigne comprend un organe de mémoire pour mémoriser le facteur de correction.

15. Appareil de soudage selon l'une des revendications 10 à 14, **caractérisé en ce que** l'appareil de soudage (10) comprend une mémoire de données (20) pour la mémorisation d'au moins une valeur de commande, qui est associée à un paramètre de processus de soudage, et peut être combinée, pour la commande ou la régulation du paramètre de processus de soudage, au facteur de correction associé au paramètre de processus de soudage.

16. Appareil de soudage selon l'une des revendications 10 à 15, **caractérisé en ce que** l'appareil de soudage (10) comprend une source de courant de soudage (16) avec l'électronique de puissance (22), aux sorties (74, 78) de laquelle peuvent être raccordés un chalumeau de soudage (12) par l'intermédiaire d'un premier conducteur de courant (72), et une pièce d'oeuvre (14) par l'intermédiaire d'un deuxième conducteur de courant (76), en vue de former un circuit de courant de soudage, qui englobe un circuit de courant de soudage intérieur situé à l'intérieur de l'électronique de puissance (22) et un circuit de courant de soudage extérieur situé à l'extérieur de l'électronique de puissance (22), et **en ce que** la valeur de commande pouvant être étalonnée est le quotient des parties imaginaires des impédances du circuit de courant de soudage extérieur et du circuit de courant de soudage intérieur.

17. Appareil de soudage selon l'une des revendications 10 à 16, **caractérisé en ce que** l'appareil de soudage (10) comprend une source de courant de soudage (16) avec l'électronique de puissance (22), aux sorties (74, 78) de laquelle peuvent être raccordés un chalumeau de soudage (12) par l'intermédiaire d'un premier conducteur de courant (72), et une pièce d'oeuvre (14) par l'intermédiaire d'un deuxième conducteur de courant (76), en vue de former un circuit de courant de soudage, l'électronique de puissance (22) présentant un dispositif de relevé du courant de soudage pour relever la valeur réelle du courant de soudage, et la valeur réelle relevée pouvant, pour l'étalonnage spécifique à l'appareil, être combinée à un facteur de correction associé au courant de soudage.

18. Appareil de soudage selon la revendication 17, **caractérisé en ce que** la source de courant de soudage (16) comprend un organe de mémoire pour mémoriser le facteur de correction associé au courant de soudage.

19. Appareil de soudage selon l'une des revendications 10 à 18, **caractérisé en ce que** l'appareil de soudage (10) comprend un dispositif d'avance de fil d'apport de soudage (32) avec un moteur d'entraînement (38) pouvant être commandé, et dont la vitesse de rotation peut être relevée, la vitesse de rotation relevée pouvant, pour l'étalonnage spécifique à l'appareil, être combinée à un facteur de correction associé à la vitesse d'avance du fil d'apport de soudage.

20. Appareil de soudage selon la revendication 19, **caractérisé en ce que** le dispositif d'avance de fil d'apport de soudage (32) comprend un organe de mémoire pour mémoriser le facteur de correction associé à la vitesse d'avance du fil d'apport de soudage.

21. Appareil de soudage selon l'une des revendications 10 à 20, **caractérisé en ce que** l'appareil de soudage (10) présente un dispositif d'alimentation en gaz (42) comprenant un régulateur de débit (44), qui peut être commandé, et comprenant une unité de relevé de débit de gaz (46) destinée à relever la valeur réelle du débit volumique de gaz, la valeur réelle relevée pouvant, pour l'étalonnage spécifique à l'appareil, être combinée à un facteur de correction associé au débit volumique de gaz.

22. Appareil de soudage selon la revendication 21, **caractérisé en ce que** le dispositif d'alimentation en gaz (42) comprend un organe de mémoire pour mémoriser le facteur de correction associé au débit volumique de gaz.

23. Appareil de soudage selon l'une des revendications 10 à 22, **caractérisé en ce que** l'appareil de soudage (10) présente un dispositif d'alimentation en fluide de refroidissement (56) pour refroidir un chalumeau de soudage (12) raccordé à l'appareil de soudage (10), le dispositif d'alimentation en fluide de refroidissement (56) présentant un dispositif de relevé de débit de fluide de refroidissement (62) pour relever la valeur réelle du débit volumique de fluide de refroidissement, la valeur réelle relevée pouvant, pour l'étalonnage spécifique à l'appareil, être combinée à un facteur de correction associé au débit volumique de fluide de refroidissement.

24. Appareil de soudage selon la revendication 23, **caractérisé en ce que** le dispositif d'alimentation en fluide de refroidissement (56) comprend un organe de mémoire pour mémoriser le facteur de correction associé au débit volumique de fluide de refroidissement.

25. Appareil de soudage selon l'une des revendications 10 à 24, **caractérisé en ce que** l'appareil de soudage (10) comprend une unité de pilotage (26) avec un écran tactile (28), un organe de mémoire étant associé à l'unité de pilotage (26), en vue de la mémorisation d'au moins un facteur de correction spécifique à l'appareil pour la sensibilité et/ou l'équilibrage X-Y de l'écran (28).

26. Appareil de soudage selon la revendication 25, **caractérisé en ce que** l'unité de pilotage (26) comprend un organe de mémoire pour mémoriser le facteur de correction associé à la sensibilité et/ou à l'équilibrage X-Y de l'écran (28).

27. Appareil de soudage selon l'une des revendications 10 à 26, **caractérisé en ce que** ledit au moins un facteur de correction reste invariable ou est sécurisé à l'encontre d'une modification, lors d'une modification de la programmation de l'unité de commande (18).

28. Appareil de soudage selon l'une des revendications 10 à 27, **caractérisé en ce que** l'appareil de soudage (10) présente, pour la mémorisation dudit au moins un facteur de correction, au moins un organe de mémoire (20) avec un emplacement de mémoire (84) protégé en réécriture dans le cas d'une modification de la programmation de l'unité de commande (18).
